# EUROPÄISCHE PATENTSCHRIFT

(11) **EP 3 626 038 B1**
(45) Veröffentlichungstag und Bekanntmachung des Hinweises auf die Patenterteilung: **09.03.2022**
(21) Anmeldenummer: 19184641.9
(22) Anmeldetag: 05.07.2019
(51) Int. Cl.: A01B 67/00, A01B 79/00, G05D 1/02, A01D 41/127

(54) **LANDWIRTSCHAFTLICHE ARBEITSMASCHINE**
AGRICULTURAL MACHINE
ENGIN DE TRAVAIL AGRICOLE

(30) Priorität: 24.09.2018 DE 102018123478
(43) Veröffentlichungstag der Anmeldung: 25.03.2020
(73) Patentinhaber: CLAAS Tractor S.A.S., 78141 Vélizy-Villacoublay Cedex (FR)
(72) Erfinder: Ehlert, Christian, 33719 Bielefeld (DE); Wieckhorst, Jan Carsten, 33104 Paderborn (DE); Steckel, Thilo, 33330 Gütersloh (DE); Mähler, Reinhold, 49214 Bad Rothenfelde (DE); Wilken, Andreas, 49143 Bissendorf (DE); Warkentin, Heinrich, 33330 Gütersloh (DE); Neitemeier, Dennis, 59510 Lippetal (DE)
(74) Vertreter: CLAAS Gruppe

(56) Entgegenhaltungen:
- DE-A1-102011 085 380
- DE-A1-102014 208 068
- DE-A1-102016 111 665

## Beschreibung

Die Erfindung betrifft eine landwirtschaftliche Arbeitsmaschine, insbesondere einen Traktor, nach dem Oberbegriff des Anspruchs 1, ein landwirtschaftliches Arbeitssystem mit einer solchen landwirtschaftlichen Arbeitsmaschine und mit mindestens einer weiteren landwirtschaftlichen Arbeitsmaschine nach Anspruch 14 sowie ein Verfahren zum Betrieb einer landwirtschaftlichen Arbeitsmaschine nach dem Oberbegriff des Anspruchs 15.

Eine solche landwirtschaftliche Arbeitsmaschine weist mindestens ein Arbeitsaggregat zur Durchführung oder Unterstützung landwirtschaftlicher Arbeit auf, insbesondere auf einem landwirtschaftlichen Feld. Bei einer solchen landwirtschaftlichen Arbeitsmaschine kann es sich um jedwede landwirtschaftliche Arbeitsmaschine handeln, die der Abarbeitung eines landwirtschaftlichen Arbeitsauftrags, beispielsweise einer Bodenbearbeitung wie Pflügen, Grubbern, Eggen oder dergleichen dient. Dazu gehören Zugmaschinen, insbesondere Traktoren, grundsätzlich aber auch Arbeitsmaschinen, insbesondere Feldhäcksler, Mähdrescher oder dergleichen. Vorliegend steht beispielhaft die als Traktor ausgestaltete landwirtschaftliche Arbeitsmaschine im Vordergrund. Unter Arbeitsaggregaten werden neben eingebauten Arbeitsaggregaten wie Schrägförderer, Dreschwerk, Häckseleinrichtung oder dergleichen auch Anbaugeräte wie Pflug, Grubber, Egge oder dergleichen verstanden.

Bei landwirtschaftlichen Arbeitsmaschinen ist es zum Zwecke der Optimierung von Arbeitsprozessen, insbesondere bei der Ernte, bekannt, unterschiedliche Betriebsparameter zu erfassen und auszuwerten. Der Begriff "Betriebsparameter" ist vorliegend weit zu verstehen. Er umfasst alle für den Betrieb der landwirtschaftlichen Arbeitsmaschine und insbesondere für einen Arbeitsauftrag relevanten Parameter, insbesondere Maschinenparameter, wie beispielsweise Drehzahl oder Fahrgeschwindigkeit, Arbeitsparameter wie beispielsweise verwendete Arbeitsaggregate oder den durchgeführten landwirtschaftlichen Arbeitsauftrag und/oder Umgebungsparameter wie beispielsweise die Bodenbeschaffenheit oder das Wetter. Wenn im Folgenden von einem Betriebsparameter die Rede ist, ist auch sein entsprechender Parameterwert gemeint. Die Erfassung entsprechender Betriebsparameter erfolgt zumindest teilweise automatisiert mittels einer Erfassungseinrichtung der landwirtschaftlichen Arbeitsmaschine, insbesondere mittels Sensoren oder Eingabegeräten für Bedienereingaben. Eine solche Erfassungseinrichtung übermittelt die erfassten Betriebsparameter, beispielsweise eine Erntegutbeschaffenheit und/oder Bodenbeschaffenheit des Feldes, an eine Regelungseinrichtung der landwirtschaftlichen Arbeitsmaschine die, rechnerbasiert, basierend auf den erfassten Betriebsparametern mindestens einen Arbeitsprozess der landwirtschaftlichen Arbeitsmaschine regelt.

Bei den erfassten Betriebsparametern handelt es sich um Ist-Daten, das heißt solche, die aktuell bei der Durchführung der landwirtschaftlichen Arbeit an der jeweiligen aktuellen Bearbeitungsstelle erfasst werden. Eine auf diesen Ist-Daten basierende Regelung eines Arbeitsprozesses erfolgt aber immer zeitlich versetzt zu der Erfassung der jeweiligen Betriebsparameter. So weist das System aus Erfassungseinrichtung, Regelungseinrichtung und Arbeitsaggregat zwangsläufig eine gewisse Trägheit auf, das heißt, das System benötigt nach der Erfassung der jeweiligen Betriebsparameter eine gewisse Zeit, bis die durchzuführende Einstellung, beispielsweise die Einstellung der Arbeitstiefe des Bodenbearbeitungsgerätes, insbesondere Pfluges, oder der Schnitthöhe eines Schneidbalkens, abgeschlossen ist. Aufgrund dieser systemimmanenten Trägheit werden Einstellungsveränderungen unter Umständen nicht rechtzeitig, das heißt zum optimalen Zeitpunkt, durchgeführt.

Bei der bekannten landwirtschaftlichen Arbeitsmaschine (DE 10 2014 208 068 A1), von der die Erfindung ausgeht, wird bei einem Erntevorgang mittels an der landwirtschaftlichen Arbeitsmaschine angeordneter Sensoren der noch nicht geerntete Feldbestand seitlich der landwirtschaftlichen Arbeitsmaschine, das heißt auf gleicher Höhe in der seitlich angrenzenden Fahrspur, erfasst. Auf diese Weise können bereits beim Durchfahren einer ersten Fahrspur einzustellende Maschinenparameter für das Durchfahren der nachfolgenden, parallelen Fahrspur erzeugt werden, das heißt einzustellende Maschinenparameter zur späteren Regelung des jeweiligen Arbeitsprozesses auf gleicher Höhe in der seitlich angrenzenden Fahrspur. Da die Maschinenparameter für die jeweilige Stelle im Feld, an der die spätere Regelung bzw. Einstellung vorgenommen werden soll, bereits beim Durchfahren der vorhergehenden Fahrspur erzeugt werden, kann das System trotz der systemimmanenten Trägheit rechtzeitig die erforderlichen Einstellungsveränderungen einleiten und ausführen. Ein solches System kann aber nur begrenzte Parameter, insbesondere nur Oberflächendaten wie Dichte und Wuchshöhe des Erntebestands, der angrenzenden Fahrspur erfassen. Aus diesem Grund und aufgrund der vielfältigen Anwendungen einer landwirtschaftlichen Arbeitsmaschine in Zusammenhang mit einer Vielzahl an unterschiedlichen Anbaugeräten in Kombination mit weitestgehend unbekannten Umweltbedingungen kann mit der bekannten landwirtschaftlichen Arbeitsmaschine aber nicht immer ein optimales Arbeitsergebnis erzielt werden.

Eine weitere landwirtschaftliche Arbeitsmaschine ist aus der Druckschrift DE 10 2011 085380 A1 bekannt.

Der Erfindung liegt das Problem zugrunde, die bekannte landwirtschaftliche Arbeitsmaschine derart auszugestalten und weiterzubilden, dass für ein möglichst breites Spektrum von Anwendungen ein verbessertes Arbeitsergebnis erzielt wird.

Das obige Problem wird bei einer landwirtschaftlichen Arbeitsmaschine gemäß dem Oberbegriff von Anspruch 1 durch die Merkmale des kennzeichnenden Teils von Anspruch 1 gelöst.

Bei der vorschlagsgemäßen landwirtschaftlichen Arbeitsmaschine handelt es sich insbesondere um einen Traktor. Grundsätzlich ist die vorschlagsgemäße Lösung auch auf jedwede andere landwirtschaftliche Arbeitsmaschine, beispielsweise einen Mähdrescher oder Feldhäcksler, anwendbar. Die landwirtschaftliche Arbeitsmaschine weist eine Erfassungseinrichtung zur Erfassung von Betriebsparametern und eine Regelungseinrichtung zur Regelung von Arbeitsprozessen der landwirtschaftlichen Arbeitsmaschine, beispielsweise eines Arbeitsaggregats und/oder Fahrantriebs, auf. Die Erfassung von Betriebsparametern erfolgt also durch die landwirtschaftliche Arbeitsmaschine selbst. Die Erfassungseinrichtung und die Regelungseinrichtung sind insbesondere Teil eines Fahrerassistenzsystems, das den Bediener bei der Bedienung der landwirtschaftlichen Arbeitsmaschine während der Durchführung eines landwirtschaftlichen Arbeitsauftrags sowie insbesondere auch beim Betrieb auf der Straße oder dem landwirtschaftlichen Betriebshof unterstützt. Die Unterstützung kann sich dabei auf das Fahren und/oder Lenken der landwirtschaftlichen Arbeitsmaschine beziehen, wie gesagt aber auch auf die Erfassung von Betriebsparametern bzw. entsprechenden Parameterwerten und auch auf die Regelung der landwirtschaftlichen Arbeitsmaschine oder einzelner Arbeitsaggregate, insbesondere eines Anbaugeräts, in Abhängigkeit von den erfassten Betriebsparametern. Als Betriebsparameter werden ein oder mehrere Maschinenparameter der landwirtschaftlichen Arbeitsmaschine erfasst.

Wesentlich ist die grundsätzliche Überlegung, dass die landwirtschaftliche Arbeitsmaschine, während sie einen landwirtschaftlichen Arbeitsauftrag durchführt, beispielsweise ein Feld pflügt oder mäht, an der jeweiligen Bearbeitungsstelle mit dem landwirtschaftlichen Arbeitsauftrag in Zusammenhang stehende Betriebsparameter erfasst, beispielsweise Umgebungsparameter betreffend die Erntegutbeschaffenheit und/oder Bodenbeschaffenheit an der jeweiligen Bearbeitungsstelle, die aktuell durchfahren wird, und/oder Maschinenparameter wie Fahrgeschwindigkeit und/oder abgegebene Antriebsleistung an dieser Stelle, und aus diesen Betriebsparametern auf die entsprechenden Betriebsparameter in einem anderen, noch nicht durchfahrenen Feldbereich schließt. Dieser andere, noch nicht durchfahrene Feldbereich ist insbesondere ein auf gleicher Höhe der aktuellen Bearbeitungsstelle seitlich angrenzender Feldbereich, insbesondere ein auf gleicher Höhe liegender Bereich einer seitlich angrenzenden Fahrspur. Dabei schließt die Regelungseinrichtung auf Basis beispielsweise der Erntegutbeschaffenheit und/oder Bodenbeschaffenheit an der aktuellen Bearbeitungsstelle auf eine bestimmte Erntegutbeschaffenheit bzw. Bodenbeschaffenheit der anderen Stelle, die auf gleicher Höhe der aktuellen Bearbeitungsstelle liegt.

Hierzu bedient sich die Regelungseinrichtung mindestens eines Online-Lern-Algorithmus und/oder eines online lernenden Modells, das heißt eines mathematischen Modells, das durch einen Algorithmus, insbesondere den Lern-Algorithmus, erzeugt wird.

"Lernen" bedeutet in diesem Zusammenhang, dass sich der Algorithmus bzw. das Modell durch die Daten, die diesem zugeführt werden, ändert, insbesondere an neue Gegebenheiten anpasst. Im Falle der vorschlagsgemäßen landwirtschaftlichen Arbeitsmaschine bedeutet dies vorzugsweise, dass an einer Bearbeitungsstelle Betriebsparameter, beispielsweise Umgebungs- und/oder Maschinenparameter, erfasst werden und über den jeweiligen Algorithmus bzw. das jeweilige Modell Informationen mit Maschinenparametern für eine Anwendung in einem anderen, insbesondere angrenzenden Feldbereich erzeugt werden. Werden dem Algorithmus später weitere erfasste Betriebsparameter, insbesondere auf gleicher Höhe in der angrenzenden Fahrspur erfasste Betriebsparameter, übermittelt, werden durch Anwendung des Algorithmus bzw. Modells dann für wiederum einen anderen Feldbereich, insbesondere angrenzenden Feldbereich bzw. eine angrenzende Fahrspur, angepasste Informationen bzw. Maschinenparameter erzeugt. Das Ergebnis der Anwendung des jeweiligen Algorithmus oder Modells wird also mit zunehmender Datenmenge immer weiter optimiert oder an neue Gegebenheiten angepasst.

"Online" meint in diesem Zusammenhang, dass die Anwendung und das Lernen des Algorithmus bzw. Modells zeitlich an die Erfassung der Betriebsparameter und/oder die Übermittlung derselben an den Algorithmus bzw. das Modell gekoppelt ist. Der Algorithmus bzw. das Modell verarbeitet also die ihm übermittelten Daten zeitlich gekoppelt, das heißt insbesondere ohne dass die Daten zwischengespeichert werden. Insbesondere erfolgt dies in Echtzeit. Der Begriff "Echtzeit" ist in diesem Zusammenhang weit zu verstehen und bedeutet, dass die Verarbeitung der erfassten Betriebsparameter durch den Algorithmus bzw. das Modell in einem vorgegebenen Zeitraum ab der Erfassung und/ab dem Übermitteln an den Algorithmus bzw. das Modell erfolgt. Dieser Zeitraum beträgt höchstens eine halbe Stunde, bevorzugt höchstens wenige Sekunden, z.B. höchstens 30 Sekunden, besonders bevorzugt höchstens wenige Bruchteile von Sekunden, z.B. höchstens eine halbe Sekunde.

Die auf diese Weise durch Anwendung des Algorithmus bzw. Modells erzeugten Informationen bzw. Maschinenparameter werden bei der landwirtschaftlichen Arbeitsmaschine zu einem späteren Zeitpunkt zur Regelung des jeweiligen Arbeitsprozesses herangezogen, nämlich wenn die landwirtschaftliche Arbeitsmaschine den anderen Feldbereich, insbesondere den seitlich angrenzenden Feldbereich oder die seitlich angrenzende Fahrspur, an einer Stelle auf gleicher Höhe, an der zuvor die Betriebsparameter erfasst wurden, durchfährt.

Ein konkretes Beispiel hierfür ist das Durchfahren einer ersten Fahrspur eines Feldes, wobei an der jeweiligen Stelle, an der sich die landwirtschaftliche Arbeitsmaschine zu diesem Zeitpunkt befindet, Betriebsparameter erfasst werden und durch Anwendung des jeweiligen Algorithmus bzw. Modells Maschinenparameter erzeugt werden, die auf gleicher Höhe (bezogen auf den Fahrweg) in der nächsten Fahrspur zur Regelung des jeweiligen Arbeitsprozesses angewandt werden. Dies kann beispielsweise beim Pflügen erfolgen, wobei der Algorithmus bzw. das Modell hier beispielsweise der Bodenbeschaffenheit an der aktuellen Bearbeitungsstelle entsprechende Maschinenparameter erzeugt und daraus eine Prognose über die Bodenbeschaffenheit an der anderen Stelle und/oder die der Bodenbeschaffenheit an der anderen Stelle entsprechenden Maschinenparameter erzeugt.

So kann davon ausgegangen werden, dass beispielsweise eine mit dem Pflug in der einen Fahrspur durchquerte Tonader auf gleicher Höhe auch in der benachbarten Fahrspur vorhanden ist. Im einfachsten Fall wird der Algorithmus bzw. das Modell für das Durchfahren dieser auf derselben Höhe befindlichen Stelle in der zweiten Fahrspur daher dieselben Maschinenparameter erzeugen. Es ist dann auch denkbar, dass beim Erreichen besagter Stelle in der zweiten Fahrspur eine andere als die angenommene Bodenbeschaffenheit vorliegt und der anderen Bodenbeschaffenheit entsprechende geänderte Betriebsparameter erfasst werden, die beispielsweise dadurch bedingt sind, dass die Tonader quer zu den Fahrspuren allmählich kleiner wird oder nicht exakt quer zur Fahrspur läuft. Mit dieser Information kann der Algorithmus bzw. das Modell dann "lernen" und die in der wiederum nächsten angrenzenden (dritten) Fahrspur auf gleicher Höhe einzustellenden Maschinenparameter entsprechend anpassen, beispielsweise die Gangwahl eines Lastschaltgetriebes des Fahrantriebes der landwirtschaftlichen Arbeitsmaschine ändern. Der Algorithmus bzw. das Modell lernt auf diese Weise beispielsweise den Verlauf der Tonader, wobei das Lernergebnis mit zunehmender Anzahl durchfahrener Fahrspuren optimiert und/oder angepasst wird.

Der jeweilige Algorithmus bzw. das jeweilige Modell kann bei der Erzeugung der Informationen, die zu einem späteren Zeitpunkt bei der prädiktiven Regelung herangezogen werden, nicht nur einzustellende Maschinenparameter für einen anderen, insbesondere angrenzenden, Feldbereich bzw. eine angrenzende Fahrspur erzeugen, sondern auch Strategien, insbesondere hinsichtlich einer Optimierung der Bearbeitungsleistung, -effizienz und/oder -qualität, einbeziehen.

Im Einzelnen wird vorgeschlagen, dass die Regelungseinrichtung der vorschlagsgemäßen landwirtschaftlichen Arbeitsmaschine konfiguriert ist, während der Durchführung eines landwirtschaftlichen Arbeitsauftrags, beispielsweise beim Pflügen oder Mähen, eine prädiktive Regelung, also eine Regelung unter Heranziehung prognostizierter Eigenschaften des Feldes, mindestens eines Arbeitsprozesses der landwirtschaftlichen Arbeitsmaschine, beispielsweise eine Einstellung der Arbeitstiefe des Pfluges oder eine Einstellung der Schnitthöhe eines Mähwerks, durchzuführen. Diese prädiktive Regelung wird auf Basis von Informationen, insbesondere einzustellenden Maschinenparametern und/oder Strategien, durchgeführt, welche von mindestens einem Online-Lern-Algorithmus und/oder mindestens einem online lernenden Modell basierend auf den erfassten Betriebsparametern, also den aktuellen Ist-Daten, erzeugt werden. Die erzeugten Informationen, insbesondere die einzustellenden Maschinenparameter, basieren auf anhand der Ist-Daten prognostizierten Eigenschaften des Feldes, beispielsweise einer prognostizierten Bodenbeschaffenheit und/oder Erntegutbeschaffenheit, an der Stelle des jeweils anderen Feldbereichs, insbesondere des zum Zeitpunkt der Erfassung der Ist-Daten seitlich angrenzenden Feldbereichs bzw. der seitlich angrenzenden Fahrspur.

Nach der bevorzugten Ausgestaltung gemäß Anspruch 2 werden die Betriebsparameter von der Erfassungseinrichtung erfasst, online an die Regelungseinrichtung übermittelt und auch online von dem jeweiligen Algorithmus und/oder Modell angewendet. All diese Verarbeitungsschritte werden also zeitlich an die Erfassung der Betriebsparameter gekoppelt durchgeführt, insbesondere in Echtzeit.

Nach der bevorzugten Ausgestaltung gemäß Anspruch 3 werden die erfassten Betriebsparameter georeferenziert. Den erfassten Betriebsparametern werden also von einem Ortungssystem generierte Geodaten zugeordnet.

Anspruch 4 definiert die bevorzugte Stelle im Feld, an der die prädiktive Regelung basierend auf den an der aktuellen Position der landwirtschaftlichen Arbeitsmaschine erfassten Betriebsparametern erfolgen soll. Diese Stelle befindet sich, ausgehend von der aktuellen Position der landwirtschaftlichen Arbeitsmaschine, vorzugsweise auf bezogen auf den Fahrweg gleicher Höhe in dem seitlich angrenzenden Feldbereich oder in der seitlich angrenzenden Fahrspur.

Die Ansprüche 5 und 6 definieren bevorzugte Betriebsparameter, insbesondere Maschinenparameter, Arbeitsparameter und Umgebungsparameter, die von der Erfassungseinrichtung erfasst und/oder von dem Algorithmus bzw. Modell herangezogen und/oder unter Anwendung des Algorithmus bzw. Modells erzeugt und als Informationen bzw. Bestandteil von Informationen der Regelungseinrichtung zur prädiktiven Regelung bereitgestellt werden können.

Die Ansprüche 7 und 8 definieren bevorzugte Möglichkeiten der Erfassung von Betriebsparametern, insbesondere von Umgebungs-, Arbeits- und/oder Maschinenparametern, durch die Erfassungseinrichtung. Eine Erfassung kann zum einen über Sensoren, zum anderen aber auch mittels bedienerseitigen Eingaben erfolgen. Auch ist es denkbar, solche Betriebsparameter über eine interne Datenquelle, beispielsweise einen internen Speicher der landwirtschaftlichen Arbeitsmaschine oder einen internen Speicher des Arbeitsaggregats bzw. Anbaugeräts, oder über eine externe Datenquelle (GPS-Satellit, Wetterstation, Internet, Hofrechner oder dergleichen) bereitzustellen. Ein erfassbarer Arbeitsparameter ist insbesondere auch die Art und/oder der Typ des Arbeitsaggregats bzw. Anbaugeräts. Eine Erfassung dieses Betriebsparameters, also die Erkennung beispielsweise des Anbaugeräts, kann auch automatisch erfolgen, insbesondere über RFID, Bluetooth, eine oder mehrere Kameras, M2X-Kommunikation, ISOBUS, TIM oder dergleichen.

Anspruch 9 definiert bevorzugte landwirtschaftliche Arbeitsaufträge, bei denen eine prädiktive Regelung erfolgen kann.

Anspruch 10 präzisiert die Informationen, die der Algorithmus bzw. das Modell erzeugt und auf deren Basis die prädiktive Regelung durchgeführt werden kann. Insbesondere beinhalten die Informationen wie bereits erläutert einen oder mehrere Betriebsparameter, insbesondere Maschinenparameter, und/oder eine oder mehrere Strategien, insbesondere hinsichtlich einer Optimierung der Bearbeitungsleistung, -effizienz und/oder -qualität.

Nach der bevorzugten Ausgestaltung gemäß Anspruch 11 ist ein Rechner zur Anwendung des jeweiligen Algorithmus bzw. Modells und/oder ein Datenspeicher zur Speicherung von durch die Anwendung des Algorithmus bzw. Modells erzeugten Informationen, insbesondere Maschinenparametern, vorgesehen.

Der Datenspeicher kann auch vorgesehen sein zur Speicherung von bei der Ausführung des landwirtschaftlichen Arbeitsauftrags erfassten Betriebsparametern, die dem Algorithmus bzw. Modell übermittelt werden. Der Rechner und/oder der jeweilige Datenspeicher können Teil der landwirtschaftlichen Arbeitsmaschine sein. Bevorzugt werden alle Daten lokal gespeichert. Grundsätzlich ist es aber auch denkbar, den Rechner und/oder den jeweiligen Datenspeicher in einer externen Datenverarbeitungsanlage, beispielsweise in einem Hofrechner, oder in einem externen Rechnernetzwerk (Cloud) vorzusehen. In letzterem Fall erfolgt dann die Anwendung des Algorithmus und/oder die Speicherung der besagten Daten insbesondere cloudbasiert.

Anspruch 12 beschreibt die Möglichkeit, basierend auf den erfassten Betriebsparametern eine Karte des Umfelds zu generieren, die die Informationen, insbesondere Umgebungs- und/oder Maschinenparameter, enthält, auf deren Basis dann die prädiktive Regelung durchgeführt werden kann. Die Karte des Umfelds ist insbesondere fahrspurabhängig oder distanzabhängig. Auf eine solche Karte kann sowohl die vorschlagsgemäße landwirtschaftliche Arbeitsmaschine zugreifen. Es können aber auch weitere landwirtschaftliche Arbeitsmaschinen, insbesondere derselben Art und/oder desselben Typs, darauf zugreifen, die vorzugsweise denselben oder einen ähnlichen landwirtschaftlichen Arbeitsauftrag, beispielsweise ebenfalls eine Bodenbearbeitung oder Erntegutbearbeitung, durchführen.

Anspruch 13 definiert bevorzugte Anwendungsfälle, bei denen die von dem Algorithmus bzw. Modell erzeugten Informationen auch für nachfolgende landwirtschaftliche Arbeitsaufträge herangezogen werden können.

Nach einer weiteren Lehre gemäß Anspruch 14, der eigenständige Bedeutung zukommt, wird ein landwirtschaftliches Arbeitssystem mit einer vorschlagsgemäßen landwirtschaftlichen Arbeitsmaschine und mit mindestens einer weiteren landwirtschaftlichen Arbeitsmaschine beansprucht, wobei während der Durchführung des landwirtschaftlichen Arbeitsauftrags die Informationen, auf deren Basis die prädiktive Regelung durchgeführt wird, auch der weiteren landwirtschaftlichen Arbeitsmaschine zur Verfügung gestellt werden, vorzugsweise während die weitere landwirtschaftliche Arbeitsmaschine zur selben Zeit im Spurversatz den gleichen landwirtschaftlichen Arbeitsauftrag durchführt.

Nach einer weiteren Lehre gemäß Anspruch 15, der eigenständige Bedeutung zukommt, wird ein Verfahren zum Betrieb einer landwirtschaftlichen Arbeitsmaschine, insbesondere einer vorschlagsgemäßen landwirtschaftlichen Arbeitsmaschine, beansprucht, mit mindestens einem Arbeitsaggregat zur Durchführung oder Unterstützung landwirtschaftlicher Arbeit, wobei die landwirtschaftliche Arbeitsmaschine eine Erfassungseinrichtung zur Erfassung von Betriebsparametern und eine Regelungseinrichtung zur Regelung von Arbeitsprozessen der landwirtschaftlichen Arbeitsmaschine aufweist. Dabei ist vorschlagsgemäß vorgesehen, dass die Regelungseinrichtung während der Durchführung eines landwirtschaftlichen Arbeitsauftrags eine prädiktive Regelung mindestens eines Arbeitsprozesses der landwirtschaftlichen Arbeitsmaschine auf Basis von Informationen durchführt die mindestens ein Online-Lern-Algorithmus und/oder mindestens ein online lernendes Modell basierend auf den erfassten Betriebsparametern erzeugt.

Im Folgenden wird die Erfindung anhand einer lediglich Ausführungsbeispiele darstellenden Zeichnung näher erläutert. In der Zeichnung zeigt
- Fig. 1: eine schematische Darstellung einer vorschlagsgemäßen landwirtschaftlichen Arbeitsmaschine in Form eines Traktors mit einem Anbaugerät in Form eines Mähwerks und
- Fig. 2: ein Ausführungsbeispiel für die Anwendung des vorschlagsgemäßen Verfahrens unter Verwendung der landwirtschaftlichen Arbeitsmaschine gemäß Fig. 1.

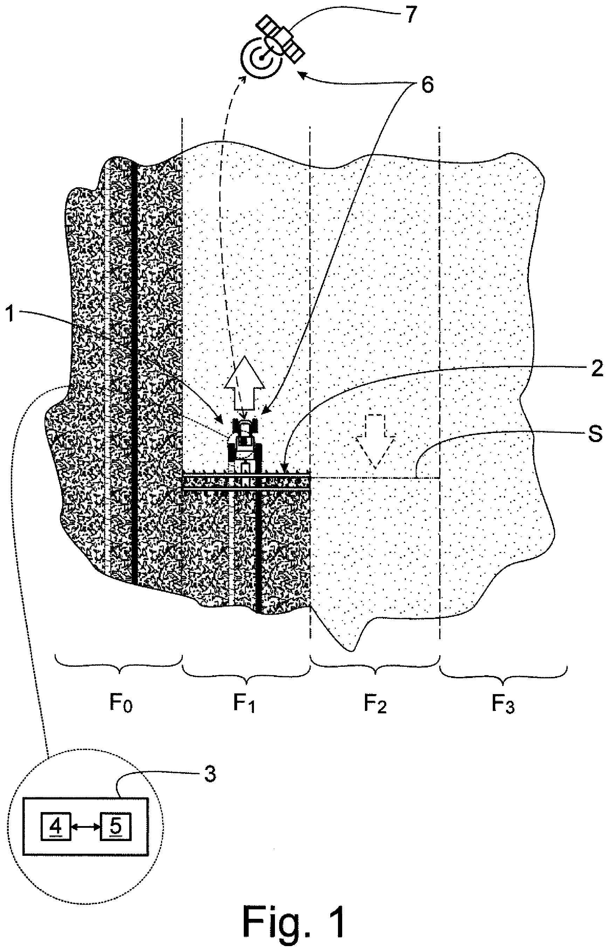

In Fig. 1 ist dargestellt, wie eine landwirtschaftliche Arbeitsmaschine 1, hier in Form eines Traktors, mittels eines Arbeitsaggregats 2 zur Durchführung oder Unterstützung landwirtschaftlicher Arbeit, hier eines Anbaugeräts, einen landwirtschaftlichen Arbeitsauftrag ausführt. Das Anbaugerät hat hier rein beispielhaft die Form eines Mähwerks, wobei der landwirtschaftliche Arbeitsauftrag hier dann eine Erntegutbearbeitung in Form eines Mähens ist. Insbesondere kann in einem alternativen Ausführungsbeispiel als Anbaugerät aber auch ein Bodenbearbeitungsgerät, beispielsweise ein Pflug, vorgesehen sein, wobei dann der landwirtschaftliche Arbeitsauftrag eine Bodenbearbeitung, beispielsweise in Form eines Pflügens, ist. Die folgenden Ausführungen gelten daher gleichermaßen für alle Formen von Arbeitsaggregaten 2 bzw. Anbaugeräten.

Die landwirtschaftliche Arbeitsmaschine 1 und das Arbeitsaggregat 2 bzw. Anbaugerät werden über ein Fahrerassistenzsystem 3 der landwirtschaftlichen Arbeitsmaschine 1 geregelt. Das Fahrerassistenzsystem 3 weist eine Erfassungseinrichtung 4 zur Erfassung von Betriebsparametern sowie eine Regelungseinrichtung 5 zur Regelung von Arbeitsprozessen der landwirtschaftlichen Arbeitsmaschine 1 auf. Die Arbeitsprozesse können Arbeitsprozesse der Zugmaschine und/oder des Arbeitsaggregats 2 bzw. Anbaugeräts sein. Beispielsweise ist ein Arbeitsprozess im vorliegenden Fall die Regelung des Fahrantriebs der landwirtschaftlichen Arbeitsmaschine 1 bzw. der Zugmaschine. Weitere Arbeitsprozesse können die Regelung des Arbeitsaggregats 2 bzw. Anbaugeräts betreffen. Im Falle des hier dargestellten Mähwerks kann dies beispielsweise die Regelung der Schnitthöhe eines Schneidbalkens des Mähwerks sein. Als Arbeitsaggregat 2 kann auch der Fahrantrieb der landwirtschaftlichen Arbeitsmaschine 1, insbesondere ein Lastschaltgetriebe, bei einem zu erwartenden Lastanstieg geregelt werden. Beispielsweise ist denkbar, dass als Anbaugerät ein Bodenbearbeitungsgerät, insbesondere ein Pflug, vorgesehen ist und vor einer zu erwartenden Laständerung aufgrund einer zu erwartenden Änderung der Bodenbeschaffenheit, beispielweise hervorgerufen durch eine Tonader im Boden, die Gangwahl des Lastschaltgetriebes geregelt wird.

Die Regelungseinrichtung 5 ist dabei vorschlagsgemäß konfiguriert, während der Durchführung des landwirtschaftlichen Arbeitsauftrags, hier der besagten Erntegutbearbeitung in Form des Mähens oder einer Bodenbearbeitung in Form eines Pflügens, eine prädiktive Regelung mindestens eines Arbeitsprozesses der landwirtschaftlichen Arbeitsmaschine 1 durchzuführen. Mit einer prädiktiven Regelung ist gemeint, dass die zur Regelung herangezogenen Maschinenparameter nicht auf an der eigentlichen Regelungsstelle S erzeugten Betriebsparametern basieren, sondern auf an einer vorhergehenden Bearbeitungsstelle erzeugten Betriebsparametern basieren, wobei eine Prognose (Prädiktion) vorgenommen wird, wie die Maschinenparameter an der eigentlichen Regelungsstelle S sein müssen. Dazu wird angenommen, dass sich die Eigenschaften des Feldes, beispielsweise die Bodenbeschaffenheit und/oder Erntegutbeschaffenheit, an der Stelle S der zu erfolgenden prädiktiven Regelung aus den Eigenschaften, beispielsweise der Bodenbeschaffenheit bzw. Erntegutbeschaffenheit, an der aktuellen Bearbeitungsstelle ableiten lassen. Als Maschinenparameter kann beispielsweise die Gangwahl des Lastschaltgetriebes des Fahrantriebs der landwirtschaftlichen Arbeitsmaschine 1 geändert werden.

Um nun für die prädiktive Regelung, also die Regelung an einer noch im Feld zu durchfahrenden Stelle, die dazu notwendigen Informationen, insbesondere die einzustellenden Maschinenparameter, zu erhalten, weist die Regelungseinrichtung 5 der vorschlagsgemäßen landwirtschaftlichen Arbeitsmaschine 1 mindestens einen Online-Lern-Algorithmus und/oder mindestens ein online lernendes Modell auf. Wesentlich ist hierbei zum einen, dass der jeweilige Algorithmus bzw. das Modell lernfähig ist und so mit zunehmender verarbeiteter Datenmenge die erzeugten Informationen, auf deren Basis die prädiktive Regelung durchgeführt wird, optimiert werden. Die erzeugten Maschinenparameter werden also beispielsweise mit zunehmender Datenmenge immer genauer, liegen also näher an den für die Gegebenheiten an der Stelle S optimalen Betriebsparametern, und/oder die erzeugten Maschinenparameter werden mit zunehmender Datenmenge immer neu angepasst.

Ein weiterer wesentlicher Aspekt ist, dass der Algorithmus bzw. das Modell die ihm übermittelten Daten "online" verarbeitet, das heißt zeitlich an die Erfassung der Betriebsparameter gekoppelt verarbeitet. Besonders bevorzugt ist hierbei, wenn die Betriebsparameter während der Durchführung des jeweiligen landwirtschaftlichen Arbeitsauftrags, beispielsweise einer Boden- oder Erntegutbearbeitung, von der Erfassungseinrichtung 4 erfasst, an die Regelungseinrichtung 5 online übermittelt werden und dann von dem jeweiligen Online-Lern-Algorithmus bzw. online lernenden Modell online angewendet werden, um die besagten Informationen zu erzeugen. Es ist hier und vorzugsweise also vorgesehen, dass zunächst Betriebsparameter als Ist-Daten erfasst werden und mit deren Erfassung zeitlich gekoppelt eine Übertragung an den jeweiligen Algorithmus und/oder das jeweilige Modell stattfindet, wobei der jeweilige Algorithmus bzw. das jeweilige Modell dann auch zeitlich daran gekoppelt die Maschinenparameter erzeugt, die dann später der prädiktiven Regelung zugrunde gelegt werden.

Bei dem hier dargestellten Ausführungsbeispiel ist ferner vorgesehen, dass die Erfassungseinrichtung 4 mit einem Ortungssystem 6 gekoppelt ist, das hier und vorzugsweise Geodaten mittels eines Geo-Satelliten 7 bereitstellt. Die Erfassungseinrichtung 4 und/oder Regelungseinrichtung 5 ist hier und vorzugsweise konfiguriert, den erfassten Betriebsparametern von dem Ortungssystem 6 generierte Geodaten zuzuordnen, also eine Georeferenzierung der Betriebsparameter durchzuführen, um georeferenzierte Parameterdaten zu erzeugen, die dann von dem jeweiligen Algorithmus bzw. Modell angewendet werden, um die besagten Informationen für die prädiktive Regelung zu erzeugen. Mit Geodaten sind in diesem Zusammenhang Daten gemeint, die eine räumliche Lage auf der Erdoberfläche definieren, also eine Positionsbestimmung erlauben. Die erfassten Betriebsparameter werden also hier einer bestimmten Position auf der Erdoberfläche eindeutig zugeordnet. Dabei wird angenommen, dass bestimmte Umgebungsparameter wie die Bodenbeschaffenheit und/oder Erntegutbeschaffenheit in lokal eng beieinanderliegenden Feldbereichen ähnlich sind. Durch die Georeferenzierung können die an der einen Stelle im Feld erzeugten Betriebsparameter auch an der anderen Stelle S im Feld zugrundegelegt werden, an denen die prädiktive Regelung tatsächlich erfolgen soll. Sind bereits mehrere Feldbereiche, beispielsweise mehrere Fahrspuren F₀, unter jeweiliger Erfassung von Betriebsparametern durchfahren worden, kann die Regelungseinrichtung 5 auch auf Änderungen von Umgebungsparametern wie Bodenbeschaffenheit und/oder Erntegutbeschaffenheit schließen und entsprechend über den jeweiligen Algorithmus bzw. das jeweilige Modell die erzeugten Informationen, insbesondere die Maschinenparameter, die der prädiktiven Regelung zugrunde gelegt werden sollen, entsprechend anpassen.

Beim vorliegenden Ausführungsbeispiel, bei dem der landwirtschaftliche Arbeitsauftrag beispielhaft eine Erntegutbearbeitung in Form eines Mähens ist, wäre beispielsweise denkbar, dass in der aktuellen Fahrspur F₁ eine Stelle mit geringerer Erntebestandsdichte durchfahren wird, was bereits beim Durchfahren der vorherigen Fahrspur F₀ auf gleicher Höhe des Fahrwegs, dort aber in stärkerem Maße, registriert worden ist. Der jeweilige Algorithmus bzw. das jeweilige Modell wird dann hier und vorzugsweise annehmen und somit "lernen", dass in der der aktuellen Fahrspur F₁ folgenden Fahrspur F₂ wiederum auf gleicher Höhe eine entsprechend höhere Erntebestandsdichte vorhanden sein wird. Der Algorithmus bzw. das Modell wird daher hier und vorzugsweise die Maschinenparameter, die der prädiktiven Regelung zugrunde gelegt werden sollen, entsprechend vorausschauend anpassen. Sollten dennoch an der entsprechenden Stelle S in der folgenden Fahrspur F₂, an der die prädiktive Regelung durchgeführt wird, andere Umgebungsparameter, hier beispielsweise eine andere als die prognostizierte bzw. erwartete Erntebestandsdichte, vorliegen, wird dies die Erfassungseinrichtung 4 dann an dieser Stelle S in der Fahrspur F₂ registrieren und dem Algorithmus bzw. Modell als Lerninformation für die wiederum nächste Fahrspur F₃ zur Verfügung stellen.

Bei einem weiteren, vergleichbaren Ausführungsbeispiel, bei dem der landwirtschaftliche Arbeitsauftrag beispielsweise eine Bodenbearbeitung in Form eines Pflügens ist, wäre entsprechend denkbar, dass in der aktuellen Fahrspur F₁ eine Stelle mit einer Tonspur durchfahren wird, was bereits beim Durchfahren der vorherigen Fahrspur F₀ auf gleicher Höhe des Fahrwegs, dort aber in geringerem Maße, registriert worden ist. Der jeweilige Algorithmus bzw. das jeweilige Modell wird dann hier und vorzugsweise annehmen und somit "lernen", dass in der der aktuellen Fahrspur F₁ folgenden Fahrspur F₂ wiederum auf gleicher Höhe die Tonspur entsprechend größer sein wird. Der Algorithmus bzw. das Modell wird daher hier und vorzugsweise die Maschinenparameter, die der prädiktiven Regelung zugrunde gelegt werden sollen, entsprechend vorausschauend anpassen, beispielsweise einen niedrigeren Gang des Lastschaltgetriebes wählen. Sollten dennoch an der entsprechenden Stelle S in der folgenden Fahrspur F₂, an der die prädiktive Regelung durchgeführt wird, andere Umgebungsparameter, hier beispielsweise eine andere als die prognostizierte bzw. erwartete Größe der Tonspur, vorliegen, wird dies die Erfassungseinrichtung 4 dann an dieser Stelle S in der Fahrspur F₂ registrieren und dem Algorithmus bzw. Modell als Lerninformation für die wiederum nächste Fahrspur F₃ zur Verfügung stellen.

Es sei darauf hingewiesen, dass bei dem hier beschriebenen und in Fig. 1 dargestellten Ausführungsbeispiel zwar immer von benachbarten Fahrspuren F₀ bis F₃ die Rede ist, die vorschlagsgemäße Lösung aber auch auf andere räumlich zueinander in Bezug stehende, insbesondere aneinander angrenzende, Feldbereiche anwendbar ist.

Die zuvor beschriebenen Betriebsparameter, die als Ist-Daten in der aktuellen Fahrspur F₁ erfasst werden, sind hier insbesondere Maschinenparameter, Arbeitsparameter und/oder Umgebungsparameter. Die Betriebsparameter, die von dem jeweiligen Algorithmus bzw. Modell als Informationen oder als Teil der Informationen erzeugt werden, die der prädiktiven Regelung zugrunde gelegt werden, sind Maschinenparameter. Im Folgenden werden lediglich beispielhaft einige Maschinenparameter, Arbeitsparameter und Umgebungsparameter näher präzisiert. Die folgenden Aufzählungen sind dabei nicht abschließend.

Der jeweilige Maschinenparameter ist insbesondere gewählt aus der Gruppe umfassend die Fahrgeschwindigkeit, den Kraftstoffverbrauch, die abgegebene Antriebsleistung, das abgegebene Antriebsdrehmoment, die Drehzahl der Antriebswelle, die Motordrückung, die Schaltdrehzahl, Parameter der Schaltcharakteristik, Parameter der Schlupfregelung, Parameter der Zugkraftregelung, Parameter der Volllastregelung, den Luftdruck und/oder Reifentyp des vorderen und/oder hinteren Reifenpaars, das Gewicht einer vorderen und/oder hinteren Ballasteinrichtung, Parameter des Front- und/oder Heckhubwerks, die Oberlenkerposition, Parameter der Traktionszylinder, Parameter der Hydraulikventileinstellung, die Hohlscheibenposition, den Zugpunkt, den Pressdruck, den Auflagedruck, Parameter des Aufbereiterspaltes und/oder Parameter des Lenksystems sowie Einstellungsveränderungen des jeweiligen der Maschinenparameter.

Der jeweilige Arbeitsparameter ist insbesondere gewählt aus der Gruppe umfassend einen landwirtschaftlichen Arbeitsauftrag, die Art und/oder den Typ der landwirtschaftlichen Arbeitsmaschine, die Art und/oder den Typ des jeweiligen Arbeitsaggregats, insb. Anbaugeräts, die mechanische, hydraulische und/oder elektrische Anbindung des jeweiligen Arbeitsaggregats an die landwirtschaftliche Arbeitsmaschine, die Maschineneinstellungen vom ISOBUS, den Leistungsbedarf des jeweiligen Arbeitsaggregats, die Arbeitstiefe und/oder -breite des jeweiligen Arbeitsaggregats, den Flächenverbrauch und/oder die Flächenleistung.

Der jeweilige Umgebungsparameter ist insbesondere gewählt aus der Gruppe umfassend das Geländeprofil des Feldes und/oder der aktuellen Fahrspur F₁, die Größe des Feldes, die aktuellen Wetterdaten, die GPS-Positionsdaten, die aktuelle Fruchtart, die aktuelle Populations-Sorte, die aktuelle Erntegutbeschaffenheit des Feldes und/oder der aktuellen Fahrspur F₁ (Feuchte, Dichte, Höhe), die aktuelle Bodenbeschaffenheit des Feldes und/oder der aktuellen Fahrspur F₁ (Feuchte, Dichte, Bodenart, Bodenzustand), und/oder die Historie des Feldes und/oder der aktuellen Fahrspur F₁, insbesondere die oder eine vorherige Fruchtart, Populations-Sorte, Erntegutbeschaffenheit und/oder Bodenbeschaffenheit. Es können also nicht nur feldbezogene, sondern auch spurbezogene Daten herangezogen werden.

Zur Erfassung der jeweiligen Betriebsparameter in der aktuellen Fahrspur F₁ ist die Erfassungseinrichtung 4 hier und vorzugsweise mit einem oder mehreren Sensoren der landwirtschaftlichen Arbeitsmaschine 1, insbesondere der Zugmaschine oder des Arbeitsaggregats 2 bzw. Anbaugeräts, gekoppelt. Zur Erfassung der jeweiligen Betriebsparameter ist auch eine Kopplung mit einer internen Datenquelle der landwirtschaftlichen Arbeitsmaschine 1, insbesondere der Zugmaschine oder des Arbeitsaggregats 2 bzw. Anbaugeräts, und/oder mit einer externen Datenquelle wie dem bereits erwähnten GPS-Satelliten 7, oder aber einer Wetterstation, dem Internet oder einem Hofrechner oder dergleichen denkbar. Auch kann zu diesem Zweck die Erfassungseinrichtung 4 bzw. das Fahrerassistenzsystem 3 mit mindestens einem Eingabegerät zur bedienerseitigen Dateneingabe, insbesondere einer Tastatur, einem Touchscreen oder einem Mikrofon gekoppelt sein. Über den jeweiligen Sensor können insbesondere Maschinenparameter und gegebenenfalls zumindest auch einige Arbeitsparameter und/oder Umgebungsparameter erfasst werden. Über das Eingabegerät können bedienerseitig weitere Betriebsparameter, insbesondere nicht automatisch erfassbare Maschinen-, Arbeits- und/oder Umgebungsparameter, beispielsweise Landmaschinen und/oder Anbaugeräteart und/oder -typ, eingegeben und der Erfassungseinrichtung 4 übermittelt werden. Besonders bevorzugt erfolgt die Erfassung von bedienerseitig übermittelten Betriebsparametern natürlichsprachig.

Gemäß Fig. 1 handelt es sich bei dem landwirtschaftlichen Arbeitsauftrag, bei dem eine prädiktive Regelung mindestens eines Arbeitsprozesses der landwirtschaftlichen Arbeitsmaschine 1 erfolgt, um eine Erntegutbearbeitung in Form eines Mähens. Grundsätzlich kann der landwirtschaftliche Arbeitsauftrag auch eine andere Erntegutbearbeitung, beispielsweise ein Schwaden, Wenden, Bergen, Pressen oder dergleichen sein. Auch kann der landwirtschaftliche Arbeitsauftrag eine Bodenbearbeitung, beispielsweise ein Pflügen, Grubbern, Eggen oder dergleichen, oder das Aufbringen eines Pflanzenschutz- oder Düngemittels sein.

Die besagten von dem jeweiligen Algorithmus bzw. Modell erzeugten Informationen, auf deren Basis die prädiktive Regelung durchgeführt wird, können wie zuvor beschrieben, einen oder mehrere Maschinenparameter beinhalten. Die erzeugten Informationen können aber auch Strategien, insbesondere hinsichtlich einer Optimierung der Bearbeitungsleistung, -effizienz und/oder -qualität, beinhalten.

Hier und vorzugsweise ist ein Rechner als Teil der Regelungseinrichtung 5 vorgesehen, der zur Anwendung des jeweiligen Algorithmus bzw. Modells dient. Der Rechner ist auch mit einem Datenspeicher der Regelungseinrichtung 5 verbunden, der zur Speicherung der durch Anwendung des Logarithmus bzw. Modells erzeugten Informationen dient. Die Daten werden hier also lokal gespeichert. Grundsätzlich ist es aber auch denkbar, die Daten an eine externe Datenverarbeitungsanlage, beispielsweise einen Hofrechner, oder ein externes Rechnernetzwerk bzw. eine Cloud zu übertragen.

Die Regelungseinrichtung 5, insbesondere ihr Rechner, ist hier und vorzugsweise auch konfiguriert, basierend auf den erfassten Betriebsparametern eine Karte des Umfelds, insbesondere fahrspur- oder distanzabhängig, zu generieren, die diejenigen Informationen enthält, auf deren Basis die prädiktive Regelung durchgeführt wird. Insbesondere handelt es sich bei diesen Informationen wie gesagt um Maschinenparameter, die an der Stelle, an der die prädiktive Regelung durchgeführt werden soll, eingestellt werden, gegebenenfalls auch um Umgebungsparameter wie Bodenbeschaffenheit und/oder Erntegutbeschaffenheit.

Nach Abschluss des landwirtschaftlichen Arbeitsauftrags sind die besagten Informationen, insbesondere in Form der Karte, hier und vorzugsweise auch für mindestens einen zeitlich nachgelagerten landwirtschaftlichen Arbeitsauftrag heranziehbar. Zu diesem Zweck werden die Informationen vorzugsweise zumindest bis zu diesem zukünftigen nachgelagerten Arbeitsauftrag bzw. Zeitpunkt in dem Datenspeicher gespeichert.

In einem anderen Anwendungsfall ist es auch denkbar, dass neben der hier beschriebenen, vorschlagsgemäßen landwirtschaftlichen Arbeitsmaschine 1 noch eine weitere landwirtschaftliche Arbeitsmaschine vorgesehen ist, wobei die beiden landwirtschaftlichen Arbeitsmaschinen zusammen ein landwirtschaftliches Arbeitssystem bilden. Während der Durchführung des landwirtschaftlichen Arbeitsauftrags durch die eine landwirtschaftliche Arbeitsmaschine 1 werden die besagten Informationen, die von dem jeweiligen Algorithmus bzw. Modell erzeugt werden, dann insbesondere auch der weiteren landwirtschaftlichen Arbeitsmaschine zur Verfügung gestellt. Dies erfolgt insbesondere in dem Fall, dass die weitere landwirtschaftliche Arbeitsmaschine zur selben Zeit im Spurversatz den gleichen landwirtschaftlichen Arbeitsauftrag durchführt.

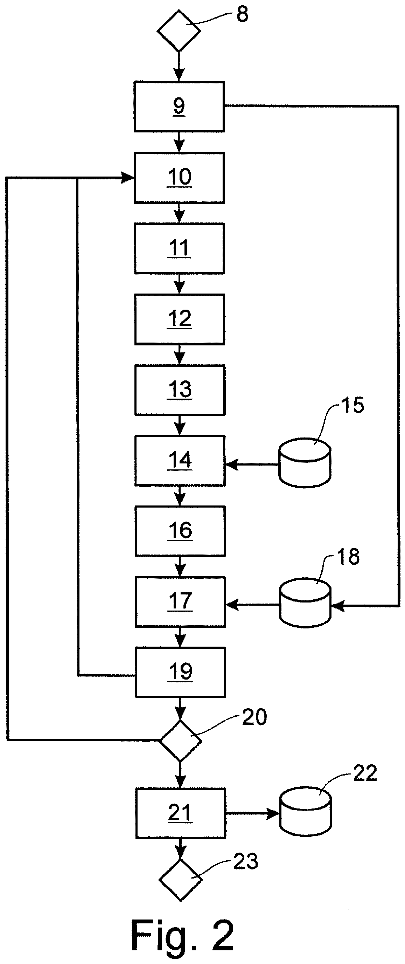

Fig. 2 zeigt schließlich beispielhaft einen möglichen Ablauf eines vorschlagsgemäßen Verfahrens zum Betrieb einer landwirtschaftlichen Arbeitsmaschine 1, hier unter Verwendung der anhand von Fig. 1 beschriebenen landwirtschaftlichen Arbeitsmaschine 1.

Nach dem Start 8 des Verfahrensablaufs werden zunächst Arbeits- und Umgebungsparameter, beispielsweise der landwirtschaftliche Arbeitsauftrag, die Art und/oder der Typ der landwirtschaftlichen Arbeitsmaschine 1 und des Anbaugeräts bzw. Arbeitsaggregat 2 sowie die aktuelle Erntegutbeschaffenheit und/oder Beschaffenheit des Feldes ermittelt (Symbol 9).

Anschließend werden weitere Betriebsparameter in Form von Maschinenparametern erfasst (Symbol 10).

Letztere werden dann mit Positionsdaten, die über den GPS-Satelliten 7 erhalten werden, georeferenziert, wodurch georeferenzierte Parameterdaten erzeugt werden (Symbol 11).

In einem weiteren Schritt werden Fahrspuren, insbesondere die aktuelle Fahrspur F₁ und gegebenenfalls eine oder mehrere benachbarte Fahrspuren F₀, F₂ erkannt (Symbol 12).

Hier und vorzugsweise werden dann die georeferenzierten Parameterdaten zur Ermittlung positionsbasierter Lastprofile herangezogen (Symbol 13).

Das aktuelle Lastprofil wird anschließend mit einem Lastprofil aus einer vorhergehenden Fahrspur, hier beispielsweise der Fahrspur F₀, oder aus historischen Daten gleicher Anwendung verglichen (Symbol 14), wobei die Speicherung des Lastprofils aus der vorherigen Fahrspur F₀ und den historischen Daten durch das Symbol 15 symbolisiert ist.

Basierend auf dem Vergleich der beiden Lastprofile, das heißt des aktuellen Lastprofils und des Lastprofils aus der vorhergehenden Fahrspur, erfolgt dann eine Prädiktion von Lastveränderungen für den weiteren Verlauf der aktuellen Fahrspur F₁ und gegebenenfalls auch schon für die folgende Fahrspur F₂ (Symbol 16).

Daraufhin erfolgt eine Definition von notwendigen Veränderungen von Maschinenparametern zum Zwecke der Regelung eines Arbeitsprozesses der landwirtschaftlichen Arbeitsmaschine 1 (Symbol 17).

Hierbei können auch zuvor definierte Strategien, insbesondere hinsichtlich einer Optimierung der Bearbeitungsleistung, -effizienz und/oder -qualität, zur Regelung des Arbeitsprozesses herangezogen werden (Symbol 18).

Es erfolgt dann eine Änderung bzw. Anpassung des bzw. der Maschinenparameter auf Basis der zuvor definierten Veränderungen, beispielsweise eine Änderung der Fahrgeschwindigkeit, der abgegebenen Antriebsleistung, der Motordrückung oder dergleichen (Symbol 19). Dies kann manuell durch den Bediener oder automatisch durch die Regelungseinrichtung 5 erfolgen.

Gleichzeitig werden wieder neue Betriebsparameter, insbesondere Maschinenparameter, erfasst (Symbol 20), die, gegebenenfalls zusammen mit den zuvor geänderten Maschinenparametern (Symbol 19) bei einem erneuten Durchlaufen der zuvor beschriebenen Verfahrensschritte berücksichtigt werden können.

Die zuvor erzeugten Daten können aber auch in Form von Lastkollektiven und/oder georeferenzierten Parameterdaten für ein Taskmanagement oder zukünftige Anwendungen abgespeichert werden (Symbole 21, 22).

Bei dem hier anhand von Fig. 2 lediglich beispielhaft beschriebenen Verfahrensablauf wird das Verfahren anschließend beendet (Symbol 23).

### Bezugszeichenliste

- 1: Landwirtschaftliche Arbeitsmaschine
- 2: Arbeitsaggregat
- 3: Fahrerassistenzsystem
- 4: Erfassungseinrichtung
- 5: Regelungseinrichtung
- 6: Ortungssystem
- 7: GPS-Satellit
- 8-23: Flussdiagrammsymbole
- F₀-F₃: Fahrspuren
- S: Stelle der prädiktiven Regelung

## Patentansprüche

1. Landwirtschaftliche Arbeitsmaschine (1), insbesondere Traktor, mit mindestens einem Arbeitsaggregat (2) zur Durchführung oder Unterstützung landwirtschaftlicher Arbeit, wobei die landwirtschaftliche Arbeitsmaschine (1) eine Erfassungseinrichtung (4) zur Erfassung von Betriebsparametern und eine Regelungseinrichtung (5) zur Regelung von Arbeitsprozessen der landwirtschaftlichen Arbeitsmaschine (1) aufweist,
wobei die Regelungseinrichtung (5) konfiguriert ist, während der Durchführung eines landwirtschaftlichen Arbeitsauftrags eine prädiktive Regelung mindestens eines Arbeitsprozesses der landwirtschaftlichen Arbeitsmaschine (1) auf Basis von Informationen durchzuführen, die mindestens ein Online-Lern-Algorithmus und/oder mindestens ein online lernendes Modell basierend auf den erfassten Betriebsparametern erzeugt,
**dadurch gekennzeichnet,**
**dass** als Betriebsparameter ein oder mehrere Maschinenparameter der landwirtschaftlichen Arbeitsmaschine (1) erfasst werden, wobei die landwirtschaftliche Arbeitsmaschine (1), während sie einen landwirtschaftlichen Arbeitsauftrag durchführt, an der jeweiligen Bearbeitungsstelle, die aktuell durchfahren wird, mit dem landwirtschaftlichen Arbeitsauftrag in Zusammenhang stehende Betriebsparameter erfasst und aus diesen Betriebsparametern auf die entsprechenden Betriebsparameter in einem anderen, noch nicht durchfahrenen Feldbereich schließt.

2. Landwirtschaftliche Arbeitsmaschine nach Anspruch 1, **dadurch gekennzeichnet, dass** die Betriebsparameter während der Durchführung des landwirtschaftlichen Arbeitsauftrags von der Erfassungseinrichtung (4) erfasst, an die Regelungseinrichtung (5) online übermittelt und von dem jeweiligen Online-Lern-Algorithmus und/oder online lernenden Modell online angewendet werden, um die Informationen zu erzeugen.

3. Landwirtschaftliche Arbeitsmaschine nach Anspruch 1 oder 2, **dadurch gekennzeichnet, dass** die Erfassungseinrichtung (4) und/oder Regelungseinrichtung (5) konfiguriert ist, den erfassten Betriebsparametern von einem Ortungssystem (6) generierte Geodaten zuzuordnen, um georeferenzierte Parameterdaten zu erzeugen, wobei die georeferenzierten Parameterdaten von dem jeweiligen Online-Lern-Algorithmus und/oder online lernenden Modell online angewendet werden, um die Informationen zu erzeugen.

4. Landwirtschaftliche Arbeitsmaschine nach einem der vorhergehenden Ansprüche, **dadurch gekennzeichnet, dass** die Anwendung des jeweiligen Online-Lern-Algorithmus und/oder online lernenden Modells die Erzeugung von mindestens einem einzustellenden Maschinenparameter oder einem Parametersatz mit mehreren Betriebsparametern zur Regelung des jeweiligen Arbeitsprozesses auf gleicher Höhe in dem seitlich angrenzenden Feldbereich und/oder in der seitlich angrenzenden Fahrspur (F₂) beinhaltet.

5. Landwirtschaftliche Arbeitsmaschine nach einem der vorhergehenden Ansprüche, **dadurch gekennzeichnet, dass** der jeweilige Maschinenparameter gewählt ist aus der Gruppe umfassend die Fahrgeschwindigkeit, den Kraftstoffverbrauch, die abgegebene Antriebsleistung, das abgegebene Antriebsdrehmoment, die Drehzahl der Antriebswelle, die Motordrückung, die Schaltdrehzahl, Parameter der Schaltcharakteristik, Parameter der Schlupfregelung, Parameter der Zugkraftregelung, Parameter der Volllastregelung, den Luftdruck und/oder Reifentyp des vorderen und/oder hinteren Reifenpaars, das Gewicht einer vorderen und/oder hinteren Ballasteinrichtung, Parameter des Front- und/ oder Heckhubwerks, die Oberlenkerposition, Parameter der Traktionszylinder, Parameter der Hydraulikventileinstellung, die Hohlscheibenposition, den Zugpunkt, den Pressdruck, den Auflagedruck, Parameter des Aufbereiterspaltes und/oder Parameter des Lenksystems sowie Einstellungsveränderungen des jeweiligen der Maschinenparameter.

6. Landwirtschaftliche Arbeitsmaschine nach einem der vorhergehenden Ansprüche, **dadurch gekennzeichnet, dass** als zusätzlicher Betriebsparameter ein oder mehrere Arbeitsparameter und/oder Umgebungsparameter erfasst werden, wobei insbesondere
- der jeweilige Arbeitsparameter gewählt ist aus der Gruppe umfassend einen landwirtschaftlichen Arbeitsauftrag, die Art und/oder den Typ der landwirtschaftlichen Arbeitsmaschine (1), die Art und/oder den Typ des jeweiligen Arbeitsaggregats (2), insbesondere Anbaugeräts, die mechanische, hydraulische und/oder elektrische Anbindung des jeweiligen Arbeitsaggregats (2) an die landwirtschaftliche Arbeitsmaschine (1), die Maschineneinstellungen vom ISOBUS, den Leistungsbedarf des jeweiligen Arbeitsaggregats (2), die Arbeitstiefe und/oder -breite und/oder den Bodenabstand des jeweiligen Arbeitsaggregats (2), den Flächenverbrauch und/oder die Flächenleistung, und/oder,
- der jeweilige Umgebungsparameter gewählt ist aus der Gruppe umfassend das Geländeprofil des Feldes und/oder der aktuellen Fahrspur (F₁), die Größe des Feldes, die aktuellen Wetterdaten, die GPS-Positionsdaten, die aktuelle Fruchtart, die aktuelle Populations-Sorte, die aktuelle Erntegutbeschaffenheit des Feldes und/oder der aktuellen Fahrspur (F₁), die aktuelle Bodenbeschaffenheit des Feldes und/oder der aktuellen Fahrspur (F₁), und/oder die Historie des Feldes und/oder der aktuellen Fahrspur (F₁), insbesondere die oder eine vorherige Fruchtart, Populations-Sorte, Erntegutbeschaffenheit und/oder Bodenbeschaffenheit.

7. Landwirtwirtschaftliche Arbeitsmaschine nach einem der vorhergehenden Ansprüche, **dadurch gekennzeichnet, dass** die Erfassungseinrichtung (4) zur Erfassung der Betriebsparameter mit mindestens einem Sensor, mit mindestens einer internen Datenquelle, mit mindestens einer externen Datenquelle und/oder mit mindestens einem Eingabegerät zur bedienerseitigen Dateneingabe, insbesondere einer Tastatur, einem Touchscreen und/oder einem Mikrofon, gekoppelt ist.

8. Landwirtschaftliche Arbeitsmaschine nach einem der vorhergehenden Ansprüche, **dadurch gekennzeichnet, dass** die Erfassungseinrichtung (4) konfiguriert ist zur natürlichsprachigen Erfassung von bedienerseitig übermittelten Betriebsparametern.

9. Landwirtschaftliche Arbeitsmaschine nach einem der vorhergehenden Ansprüche, **dadurch gekennzeichnet, dass** der landwirtschaftliche Arbeitsauftrag eine Bodenbearbeitung, insbesondere ein Pflügen, Grubbern oder Eggen, eine Erntegutbearbeitung, insbesondere ein Mähen, Schwadern, Wenden, Bergen oder Pressen, oder ein Aufbringen eines Pflanzenschutzmittels oder Düngemittels ist.

10. Landwirtschaftliche Arbeitsmaschine nach einem der vorhergehenden Ansprüche, **dadurch gekennzeichnet, dass** die erzeugten Informationen, auf deren Basis die prädiktive Regelung durchgeführt wird, einen oder mehrere Maschinenparameter und/oder eine oder mehrere Strategien, insbesondere hinsichtlich einer Optimierung der Bearbeitungsleistung, -effizienz und/oder -qualität, beinhalten.

11. Landwirtschaftliche Arbeitsmaschine nach einem der vorhergehenden Ansprüche, **dadurch gekennzeichnet, dass** ein Rechner zur Anwendung des Online-Lern-Algorithmus und/oder online lernenden Modells und/oder ein Datenspeicher zur Speicherung der durch Anwendung des durch den Online-Lern-Algorithmus und/oder das online lernende Modell erzeugten Informationen vorgesehen ist, vorzugsweise, dass der Rechner und/oder Datenspeicher Teil der landwirtschaftlichen Arbeitsmaschine (1) oder Teil einer externen Datenverarbeitungsanlage oder eines externen Rechnernetzwerks ist.

12. Landwirtschaftliche Arbeitsmaschine nach einem der vorhergehenden Ansprüche, **dadurch gekennzeichnet, dass** die Regelungseinrichtung (5) konfiguriert ist, basierend auf den erfassten Betriebsparametern eine Karte des Umfelds, insbesondere fahrspur- oder distanzabhängig, zu generieren, die die Informationen enthält, auf deren Basis die prädiktive Regelung durchgeführt wird.

13. Landwirtschaftliche Arbeitsmaschine nach einem der vorhergehenden Ansprüche, **dadurch gekennzeichnet, dass** die Informationen, auf deren Basis die prädiktive Regelung durchgeführt wird, nach Abschluss des landwirtschaftlichen Arbeitsauftrags, insbesondere in Form der Karte, auch für mindestens einen zeitlich nachgelagerten landwirtschaftlichen Arbeitsauftrag bereitgestellt werden und/oder heranziehbar sind.

14. Landwirtschaftliches Arbeitssystem mit einer landwirtschaftlichen Arbeitsmaschine (1) nach einem der vorhergehenden Ansprüche und mit mindestens einer weiteren landwirtschaftlichen Arbeitsmaschine, wobei während der Durchführung des landwirtschaftlichen Arbeitsauftrags die Informationen, auf deren Basis die prädiktive Regelung durchgeführt wird, auch der weiteren landwirtschaftlichen Arbeitsmaschine zur Verfügung gestellt werden, vorzugsweise während die weitere landwirtschaftliche Arbeitsmaschine zur selben Zeit im Spurversatz den gleichen landwirtschaftlichen Arbeitsauftrag durchführt.

15. Verfahren zum Betrieb einer landwirtschaftlichen Arbeitsmaschine (1), insbesondere einer landwirtschaftlichen Arbeitsmaschine (1) nach einem der vorhergehenden Ansprüche, mit mindestens einem Arbeitsaggregat (2) zur Durchführung oder Unterstützung landwirtschaftlicher Arbeit, wobei die landwirtschaftliche Arbeitsmaschine (1) eine Erfassungseinrichtung (4) zur Erfassung von Betriebsparametern und eine Regelungseinrichtung (5) zur Regelung von Arbeitsprozessen der landwirtschaftlichen Arbeitsmaschine (1) aufweist, wobei die Regelungseinrichtung (5) während der Durchführung eines landwirtschaftlichen Arbeitsauftrags eine prädiktive Regelung mindestens eines Arbeitsprozesses der landwirtschaftlichen Arbeitsmaschine (1) auf Basis von Informationen durchführt, die mindestens ein Online-Lern-Algorithmus und/oder mindestens ein online lernendes Modell basierend auf den erfassten Betriebsparametern erzeugt, wobei als Betriebsparameter ein oder mehrere Maschinenparameter der landwirtschaftlichen Arbeitsmaschine (1) erfasst werden, wobei die Erfassungseinrichtung (5) an der jeweiligen Bearbeitungsstelle mit dem landwirtschaftlichen Arbeitsauftrag in Zusammenhang stehende Betriebsparameter erfasst, die aktuell durchfahren wird, und aus diesen Betriebsparametern auf die entsprechenden Betriebsparameter in einem anderen, noch nicht durchfahrenen Feldbereich schließt.

## Claims

1. An agricultural working machine (1), in particular a tractor, with at least one working assembly (2) for carrying out or supporting agricultural work, wherein the agricultural working machine (1) has a detecting device (4) for detecting operational parameters and a control device (5) for controlling operating procedures of the agricultural working machine (1),
wherein the control device (5) is configured to carry out predictive control of at least one operating procedure of the agricultural working machine (1) while carrying out an agricultural operational assignment on the basis of information which is produced by at least one online learning algorithm and/or at least one online learning model based on the detected operational parameters,
**characterized in that**
one or more machine parameters of the agricultural working machine (1) are detected as the operational parameter wherein, while it carries out an agricultural operational assignment, the agricultural working machine (1) detects operational parameters associated with the agricultural operational assignment at the respective site of operations which is currently being traversed and from these operational parameters, it extrapolates the corresponding operational parameters in another region of the field which has not yet been traversed.

2. The agricultural working machine according to claim 1, **characterized in that** while the agricultural operational assignment is being carried out, the operational parameters are detected by the detecting device (4), transmitted online to the control device (5) and used online by the respective online learning algorithm and/or online learning model in order to produce the information.

3. The agricultural working machine according to claim 1 or claim 2, **characterized in that** the detecting device (4) and/or control device (5) is configured to assign geographical data generated by a positioning system (6) to the detected operational parameters in order to produce georeferenced parameter data, wherein the georeferenced parameter data are used online by the respective online learning algorithm and/or online learning model in order to produce the information.

4. The agricultural working machine according to one of the preceding claims, **characterized in that** the application of the respective online learning algorithm and/or online learning model includes the production of at least one machine parameter to be adjusted or a set of parameters with a plurality of operational parameters for controlling the respective operating procedure at the same height in the laterally adjoining region of the field and/or in the laterally adjoining drive track (F₂).

5. The agricultural working machine according to one of the preceding claims, **characterized in that** the respective machine parameter is selected from the group comprising the drive speed, the fuel consumption, the output driving power, the output drive torque, the rotational speed of the drive shaft, the engine overloading, the shift speed, parameters of the shifting characteristics, parameters of the slip control, parameters of the traction control, parameters of the full load control, the air pressure and/or the tyre type of the front and/or rear tyre pair, the weight of a front and/or rear ballast device, parameters of the front and/or rear linkage, the upper link position, parameters of the traction cylinder, parameters of the hydraulic valve settings, the concave disc position, the pull point, the pressing force, the ground pressure, the parameters of the conditioner gap and/or the parameters of the steering system, as well as variations in the settings of the machine parameter or parameters.

6. The agricultural working machine according to one of the preceding claims, **characterized in that** one or more working parameters and/or environmental parameters are detected as an additional operational parameter, wherein in particular,
- the respective working parameter is selected from the group comprising an agricultural operational assignment, the kind and/or type of the agricultural working machine (1), the kind and/or type of the respective working assembly (2), in particular an implement, the mechanical, hydraulic and/or electrical attachment of the respective working assembly (2) to the agricultural working machine (1), the machine settings from ISOBUS, the power demands for the respective working assembly (2), the working depth and/or width and/or the distance of the respective working assembly (2) to the ground, the land usage and/or the output per unit area, and/or
- the respective environmental parameter is selected from the group comprising the relief of the field and/or the current drive track (F₁), the size of the field, the current weather data, the GPS positioning data, the current crop type, the current population type, the current quality of the harvested material from the field and/or the current drive track (F₁), the current quality of the ground in the field and/or the current drive track (F₁) and/or the history of the field and/or the current drive track (F₁), in particular the crop type or a preceding crop type, population type, quality of the harvested material and/or quality of the ground.

7. The agricultural working machine according to one of the preceding claims, **characterized in that** the detecting device (4) for detecting the operational parameters is coupled to at least one sensor with at least one internal data source, with at least one external data source and/or with at least one input device for the input of data by the operator, in particular a keyboard, a touchscreen and/or a microphone.

8. The agricultural working machine according to one of the preceding claims, **characterized in that** the detecting device (4) is configured for natural language acquisition of operational parameters transmitted by the operator.

9. The agricultural working machine according to one of the preceding claims, **characterized in that** the agricultural operational assignment is working of the soil, in particular ploughing, grubbing or harrowing, processing of the harvested material, in particular cutting, swathing, turning, stacking or baling, or application of a plant protection agent or fertiliser.

10. The agricultural working machine according to one of the preceding claims, **characterized in that** the information which is produced, on the basis of which the predictive control is carried out, includes one or more machine parameters and/or one or more strategies, in particular as regards optimization of the performance, efficiency and/or quality of cultivation.

11. The agricultural working machine according to one of the preceding claims, **characterized in that** a computer is provided for applying the online learning algorithm and/or online learning model and/or a data memory is provided for storage of the information produced by the online learning algorithm and/or the online learning model, preferably **in that** the computer and/or the data memory is a part of the agricultural working machine (1) or a part of an external data processing unit or an external component network.

12. The agricultural working machine according to one of the preceding claims, **characterized in that** the control device (5) is configured to generate a map of the surroundings based on the detected operational parameters, in particular as a function of the drive track or distances, the map containing the information on the basis of which the predictive control is carried out.

13. The agricultural working machine according to one of the preceding claims, **characterized in that** the information on the basis of which the predictive control is carried out, in particular in the form of the map, is provided and/or can be consulted after completion of the agricultural operational assignment and also for at least one agricultural operational assignment at a later point in time.

14. An agricultural working system with an agricultural working machine (1) according to one of the preceding claims and with at least one other agricultural working machine wherein, when carrying out the agricultural operational assignment, the information on the basis of which the predictive control is carried out is also made available to the other agricultural working machine, preferably while the other agricultural working machine carries out the identical agricultural operational assignment at the same time but in an offset drive track.

15. A method for operating an agricultural working machine (1), in particular an agricultural working machine (1) according to one of the preceding claims, with at least one working assembly (2) for carrying out or supporting agricultural work, wherein the agricultural working machine (1) has a detecting device (4) for detecting operational parameters and a control device (5) for controlling operating procedures of the agricultural working machine (1), wherein the control device (5) carries out predictive control of at least one operating procedure of the agricultural working machine (1) while carrying out an agricultural operational assignment on the basis of information which is produced by at least one online learning algorithm and/or at least one online learning model based on the detected operational parameters, wherein one or more machine parameters of the agricultural working machine (1) are detected as the operational parameter, wherein the detecting device (5) detects operational parameters which are associated with the agricultural operational assignment at the respective site of operations which is currently being traversed and from these operational parameters, it extrapolates the corresponding operational parameters in another region of the field which has not yet been traversed.

## Revendications

1. Machine de travail agricole (1), en particulier tracteur, comprenant au moins un organe de travail (2) pour réaliser ou assister le travail agricole, la machine de travail agricole (1) comportant un équipement de détection (4) pour détecter des paramètres d'exploitation et un équipement de régulation (5) pour réguler des processus de travail de la machine de travail agricole (1),
l'équipement de régulation (5) étant configuré pour réaliser, pendant l'exécution d'une tâche agricole, une régulation prédictive au moins d'un processus de travail de la machine de travail agricole (1) sur la base d'informations qu'au moins un algorithme d'apprentissage en ligne et/ou au moins un modèle d'apprentissage en ligne génèrent sur la base des paramètres d'exploitation détectés,
**caractérisée en ce qu'**un ou plusieurs paramètres machine de la machine de travail agricole (1) sont détectés comme paramètres d'exploitation, la machine de travail agricole (1) détectant, pendant qu'elle exécute une tâche agricole, sur le site travaillé respectif qui est parcouru à cet instant, des paramètres d'exploitation en rapport avec la tâche agricole, et déduisant de ces paramètres d'exploitation les paramètres d'exploitation correspondants dans une autre zone de champ non encore parcourue.

2. Machine de travail agricole selon la revendication 1, **caractérisée en ce que** les paramètres d'exploitation sont détectés par l'équipement de détection (4) pendant l'exécution de la tâche agricole, transmis en ligne à l'équipement de régulation (5) et appliqués en ligne par l'algorithme d'apprentissage en ligne respectif et/ou le modèle d'apprentissage en ligne afin de générer les informations.

3. Machine de travail agricole selon la revendication 1 ou 2, **caractérisée en ce que** l'équipement de détection (4) et/ou l'équipement de régulation (5) sont configurés pour associer aux paramètres d'exploitation détectés des géodonnées générées par un système de localisation (6) afin de générer des données paramétriques géoréférencées, les données paramétriques géoréférencées étant appliquées en ligne par l'algorithme d'apprentissage en ligne respectif et/ou par le modèle d'apprentissage en ligne afin de générer les informations.

4. Machine de travail agricole selon une des revendications précédentes, **caractérisée en ce que** l'application de l'algorithme d'apprentissage en ligne respectif et/ou du modèle d'apprentissage en ligne englobe la génération d'au moins un paramètre machine à instaurer ou d'un jeu de paramètres avec plusieurs paramètres d'exploitation pour réguler le processus de travail respectif au même niveau dans la zone de champ latéralement contiguë et/ou dans la trace de roulement latéralement contiguë (F₂).

5. Machine de travail agricole selon une des revendications précédentes, **caractérisée en ce que** le paramètre machine respectif est choisi parmi le groupe incluant la vitesse de marche, la consommation de carburant, la puissance d'entraînement délivrée, le couple d'entraînement délivré, la vitesse de rotation de l'arbre d'entraînement, la tolérance de chute de régime moteur, le régime de passage de rapports, les paramètres de la caractéristique de passage de rapports, les paramètres de la régulation de glissement, les paramètres de régulation de force de traction, les paramètres de régulation à pleine charge, la pression d'air et/ou le type de pneumatiques de la paire de pneumatiques avant et/ou arrière, le poids d'un équipement de lestage avant et/ou arrière, les paramètres du relevage avant et/ou arrière, la position du bras supérieur, les paramètres des vérins de traction, les paramètres de réglage de valves hydrauliques, la position de disques galbés, le point de traction, la pression de pressage, la pression d'appui, les paramètres de l'interstice de conditionneur et/ou les paramètres du système de direction ainsi que des modifications de réglage de chacun des paramètres machine.

6. Machine de travail agricole selon une des revendications précédentes, **caractérisée en ce qu'**un ou plusieurs paramètres travail et/ou paramètres environnement sont détectés en tant que paramètres d'exploitation supplémentaires, en particulier
- le paramètre travail respectif étant choisi parmi le groupe incluant une tâche agricole, le genre et/ou le type de la machine de travail agricole (1), le genre et/ou le type de l'organe de travail respectif (2), en particulier de l'outil rapporté, la liaison mécanique, hydraulique et/ou électrique de l'organe de travail respectif (2) avec la machine de travail agricole (1), les réglages machine de l'ISOBUS, le besoin en puissance de l'organe de travail respectif (2), la profondeur et/ou la largeur de travail et/ou la distance au sol de l'organe de travail respectif (2), l'utilisation de la surface ou le rendement de surface, et/ou
- le paramètre environnement respectif étant choisi parmi le groupe incluant le profil de terrain du champ et/ou de la trace de roulement instantanée (F₁), la grandeur du champ, les données météorologiques instantanées, les données de position GPS, le type de culture instantané, la variété de population instantanée, la nature de produit récolté instantanée du champ et/ou de la trace de roulement instantanée (F₁), la nature de sol instantanée du champ et/ou de la trace de roulement respective (F₁), en particulier le ou un type de culture antérieur, la ou une variété de population antérieure, la ou une nature de produit récolté antérieure et/ou la ou une nature du sol antérieure.

7. Machine de travail agricole selon une des revendications précédentes, **caractérisée en ce que**, pour détecter les paramètres d'exploitation, l'équipement de détection (4) est couplé avec au moins un capteur, avec au moins une source de données interne, avec au moins une source de données externe et/ou avec au moins un appareil d'entrée pour l'entrée de données côté utilisateur, en particulier avec un clavier, un écran tactile et/ou un microphone.

8. Machine de travail agricole selon une des revendications précédentes, **caractérisée en ce que** l'équipement de détection (4) est configuré pour la détection en langue naturelle de paramètres d'exploitation transmis côté utilisateur.

9. Machine de travail agricole selon une des revendications précédentes, **caractérisée en ce que** la tâche agricole est un travail du sol, en particulier un labourage, un travail au cultivateur ou un hersage, un traitement du produit récolté, en particulier un moissonnage, un andainage, un fanage, un ramassage ou un pressage, ou un épandage de produit phytosanitaire ou d'engrais.

10. Machine de travail agricole selon une des revendications précédentes, **caractérisée en ce que** les informations générées, sur la base desquelles est réalisée la régulation prédictive, contiennent un ou plusieurs paramètres machine et/ou une ou plusieurs stratégies, en particulier en vue d'une optimisation du rendement, de l'efficience et/ou de la qualité du travail.

11. Machine de travail agricole selon une des revendications précédentes, **caractérisée en ce qu'**il est prévu un ordinateur pour appliquer l'algorithme d'apprentissage en ligne et/ou le modèle d'apprentissage en ligne et/ou une mémoire de données pour mémoriser les informations générées par l'application de l'algorithme d'apprentissage en ligne et/ou du modèle d'apprentissage en ligne, de préférence **en ce que** l'ordinateur et/ou la mémoire de données font partie de la machine de travail agricole (1) ou partie d'une installation de traitement de données externe ou d'un réseau d'ordinateurs extérieur.

12. Machine de travail agricole selon une des revendications précédentes, **caractérisée en ce que** l'équipement de régulation (5) est configuré pour générer une carte de l'environnement, en particulier en fonction de la trace de roulement ou de la distance, laquelle contient des informations sur la base desquelles est réalisée la régulation prédictive.

13. Machine de travail agricole selon une des revendications précédentes, **caractérisée en ce que** les informations, sur la base desquelles est réalisée la régulation prédictive, sont fournies et/ou consultables après achèvement de la tâche agricole, en particulier sous forme de carte, même pour au moins une tâche agricole différée dans le temps.

14. Système de travail agricole comprenant une machine de travail agricole (1) selon une des revendications précédentes et comprenant au moins une autre machine de travail agricole, pendant la réalisation de la tâche agricole les informations sur la base desquelles est réalisée la régulation prédictive étant fournies aussi à l'autre machine de travail agricole, de préférence pendant que l'autre machine de travail agricole réalise la même tâche agricole en même temps avec un décalage d'une ligne.

15. Procédé de fonctionnement d'une machine de travail agricole (1), en particulier d'une machine de travail agricole (1) selon une des revendications précédentes, comprenant au moins un organe de travail (2) pour réaliser ou assister le travail agricole, la machine de travail agricole (1) comportant un équipement de détection (4) pour détecter des paramètres d'exploitation et un équipement de régulation (5) pour réguler des processus de travail de la machine de travail agricole (1), l'équipement de régulation (5) réalisant, pendant l'exécution d'une tâche agricole, une régulation prédictive au moins d'un processus de travail de la machine de travail agricole (1) sur la base d'informations qu'au moins un algorithme d'apprentissage en ligne et/ou au moins un modèle d'apprentissage en ligne génèrent sur la base des paramètres d'exploitation détectés, un ou plusieurs paramètres machine de la machine de travail agricole (1) étant détectés comme paramètres d'exploitation, l'équipement de détection (5) détectant, sur le site travaillé respectif qui est parcouru à cet instant, des paramètres d'exploitation en rapport avec la tâche agricole, et déduisant de ces paramètres d'exploitation les paramètres d'exploitation correspondants dans une autre zone de champ non encore parcourue.
